# EUROPEAN PATENT SPECIFICATION

(11) **EP 4 187 460 B1**
(45) Date of publication and mention of the grant of the patent: **01.04.2026**
(21) Application number: 22209235.5
(22) Date of filing: 23.11.2022
(51) Int. Cl.: G06Q 10/08, G05B 19/418

(54) **INTEGRATED CONTROL SYSTEM AND AUTOMATED TRANSPORTATION SYSTEM INCLUDING THE SAME**
INTEGRIERTES STEUERUNGSSYSTEM UND AUTOMATISIERTES TRANSPORTSYSTEM DAMIT
SYSTÈME DE COMMANDE INTÉGRÉ ET SYSTÈME DE TRANSPORT AUTOMATISÉ LE COMPRENANT

(30) Priority: 25.11.2021 KR 20210164199
(43) Date of publication of application: 31.05.2023
(73) Proprietor: SK On Co., Ltd., Seoul 03161 (KR)
(72) Inventor: PARK, Sang Ho, 34124 Daejeon (KR); CHOI, Hyun Ho, 34124 Daejeon (KR); KIM, Jun Seok, 34124 Daejeon (KR); RHIE, Seung Joon, 34124 Daejeon (KR); CHAE, Soo Hwang, 34124 Daejeon (KR); TAK, Seong Heon, 34124 Daejeon (KR); HUR, Min, 34124 Daejeon (KR)
(74) Representative: Stolmár & Partner Patentanwälte PartG mbB

(56) References cited:
- US-A1- 2008 281 456

## Description

### BACKGROUND

### 1. FIELD

The present disclosure relates to an automated transportation system including an integrated control system.

### 2. DESCRIPTION OF RELATED ART

Logistics is physical distribution and includes the process of transporting, unloading, storing, and packaging manufactured goods. In order to prevent such goods being transported being contaminated or damaged in the course of transportation, or to prevent delivery accidents and the like, an automated transportation system including a material control system may be utilized in the process line. On the other hand, the transportation of transportation goods is carried out by various types of transportation equipment such as Automated Guided Vehicle (AGV), Overhead Hoist Transport (OHT), Stacker Crane, Conveyor, and the like. On the other hand, the transportation equipment is controlled by transportation facility control systems applied to the hardware device disposed therearound. For example, US 2008/281456 A1 discloses a factory automation system for wafer transportation.

### SUMMARY

An aspect of the present disclosure is to provide an automated transportation system that may be operated efficiently and stably, by managing transportation facility control systems controlling transportation equipment with an integrated control system that is applied to a hardware device disposed in a space separated from the transportation equipment. The present invention is defined by the appended claims.

According to an aspect of the present disclosure, an automated transportation system includes a facility layer including at least one first transportation facility, and a system layer, in which an integrated control system controlling the at least one first transportation facility, a material control system (MCS) controlling a transport command with respect to the integrated control system, an application server managing a Real-Time Dispatcher (RTD), and a database storing information corresponding to an operation of the material control system and the real-time dispatcher are established. The facility layer and the system layer are spatially separated.

According to an aspect of the present disclosure, which is not given in the claims, an integrated control system is characterized in that, the integrated control system is separately established in a space separated from a plurality of transportation facilities, and is comprised of a plurality of control systems corresponding to the plurality of transportation facilities, respectively, the plurality of control systems being managed by a plurality of virtualized hosts, respectively, and the integrated control system is established as a single server integrated with a Material Control System (MCS) and a Real-Time Dispatcher (RTD), and controls the plurality of transportation facilities based on a transport command transmitted by the material control system and the real-time dispatcher to transport transportation goods.

### BRIEF DESCRIPTION OF DRAWINGS

The above and other aspects, features, and advantages of the present inventive concept will be more clearly understood from the following detailed description, taken in conjunction with the accompanying drawings, in which:
FIGS. 1 and 2 are block diagrams schematically illustrating an automated transportation system according to an embodiment of the present disclosure;
FIG. 3 is a block diagram illustrating an automated transportation system according to a comparative example;
FIG. 4 is a block diagram illustrating an automated transportation system according to an embodiment of the present disclosure;
FIG. 5 is a block diagram illustrating an automated transportation system according to another embodiment;
FIG. 6 is a block diagram illustrating an automated transportation system according to another embodiment;
FIG. 7 is a block diagram illustrating an automated transportation system according to another embodiment;
FIG. 8 is a block diagram illustrating a system layer of an automated transportation system according to an embodiment; and
FIGS. 9 and 10 are block diagrams illustrating a server redundancy structure in an automated transportation system according to an embodiment.

### DETAILED DESCRIPTION

Hereinafter, embodiments will be described with reference to the accompanying drawings.

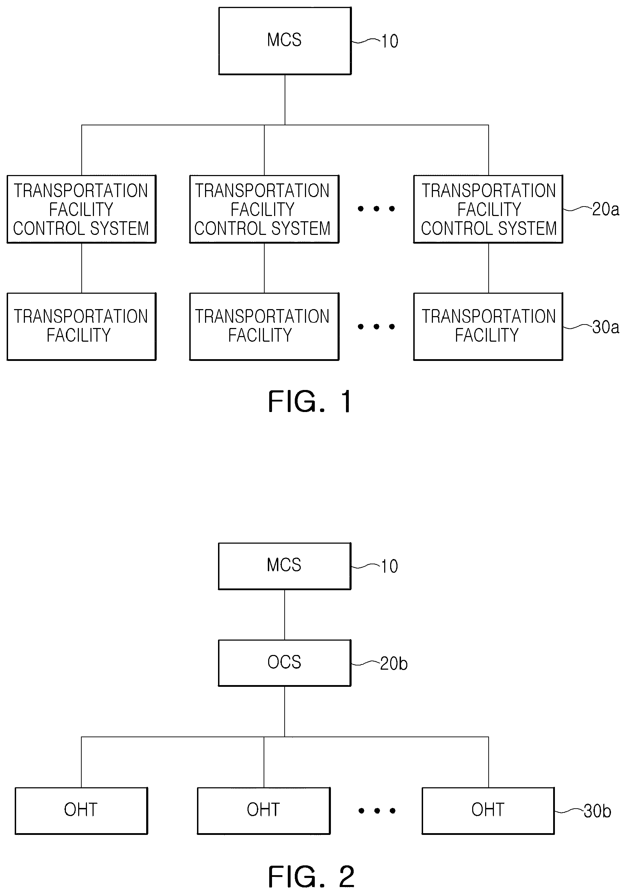

FIGS. 1 and 2 are block diagrams schematically illustrating an automated transportation system according to an embodiment.

Referring to FIG. 1, an automated transportation system may include a plurality of transportation facilities 30a for transporting transportation goods, a plurality of transportation facility control systems 20a for controlling the plurality of transportation facilities 30a respectively, and a material control system (MCS) 10 for managing the plurality of transportation facility control systems 20a.

The plurality of transportation facilities 30a may be one of an Automated Guided Vehicle (AGV), an Overhead Hoist Transport (OHT), a Stacker Crane (SC), and a conveyor. However, this is merely an example and the present disclosure may not be limited thereto. As an example, the plurality of transportation facilities 30a may be transportation facilities other than the above facilities, and the plurality of transportation facilities 30a may include two or more different types of transportation facilities.

The automated guided vehicle (AGV) may automatically transport items in a work space without a separate rail. The AGV may include a photo/electromagnetic induced AGV, an image induced AGV, and/or a laser induced AGV. For example, a photo/electromagnetic induced AGV may have a reflective tape attached onto the path the AGV will travel, or a magnetic induction line attached thereto, thereby tracking the same. The image induced AGVmay find coordinates using the reflected image after irradiating infrared rays on tags for identification of different patterns attached to the ceiling. The laser induced AGV uses a rotating laser scanner to irradiate the wall with infrared rays and then uses the reflected light to find the coordinates.

The overhead hoist transport (OHT) may travel on a track along a rail installed on the ceiling. The OHT may ensure efficient space for transporting transportation goods in areas with long transport distances and high transport volumes.

The stacker crane SC may travel on a track through a traveling rail disposed therebelow and a guide rail disposed on an upper portion thereof. As an example, the SC may use the lifting device and the fork device to perform loading and unloading of transportation goods. The SC may serve to allow for a relatively large amount of items to be stored in a limited space.

The plurality of transportation facilities 30a may be interfaced with a corresponding control system among the plurality of transportation facility control systems 20a in a wireless communication manner, respectively. The plurality of transportation facility control systems 20a may transmit a conveying command to the corresponding transportation facility 30a based on the set optimal conveying condition.

In the automated transportation system according to an embodiment, the plurality of transportation facility control systems 20a may be constructed to be spatially separated from the plurality of transportation facilities 30a. As an example, the plurality of transportation facilities 30a may be disposed at a production site where the transportation goods are moved, and the plurality of transportation facility control systems 20a may be established in a separate server room separated from the production site.

Referring to FIG. 2, the automated transportation system may include a plurality of overhead hoist transport (OHT) 30b for transporting goods to be transported, one OHT Control System (OCS) 20b for controlling the plurality of OHTs 30b, and a material control system 10 for managing the OCS 20b.

As described above, the plurality of OHTs 30b may be interfaced with the OCS 20b in a wireless communication manner, while travelling on a track along a rail installed on the ceiling and transmitting a transport command.

The OCS 20b may search for a shortest route for completing the transport operation from the departure area to the destination in the shortest time according to the command of the material control system (MCS) 10. The OCS 20b may select an OHT in an optimal position suitable for performing a transport operation from among the plurality of OHTs 30b and transmit a transport command. The plurality of OHTs 30b may transport the goods to be transported from an arbitrary port to a destination port according to the transport command of the OCS 20b.

Referring to FIGS. 1 and 2, it is illustrated that OHTs 30b are interfaced with one OCS 20b and the plurality of transportation facilities 30a including the OHT are interfaced with a plurality of transportation facility control systems 20a corresponding thereto respectively, but this is only an example and the present disclosure is not limited thereto. For example, the plurality of transportation facilities 30a and 30b including the OHT may be interfaced with one transportation facility control system that controls the plurality of transportation facilities as a whole.

The material control system (MCS) 10 selects the optimal transport route of transportation goods, using the modeling system created based on the actual layout information of the production site, and may transmit a transport command to the plurality of transportation facility control systems 20a and 20b including the OCS 20b. The MCS 10 may control the entire automatic transportation logistics by performing real-time monitoring of the transportation goods.

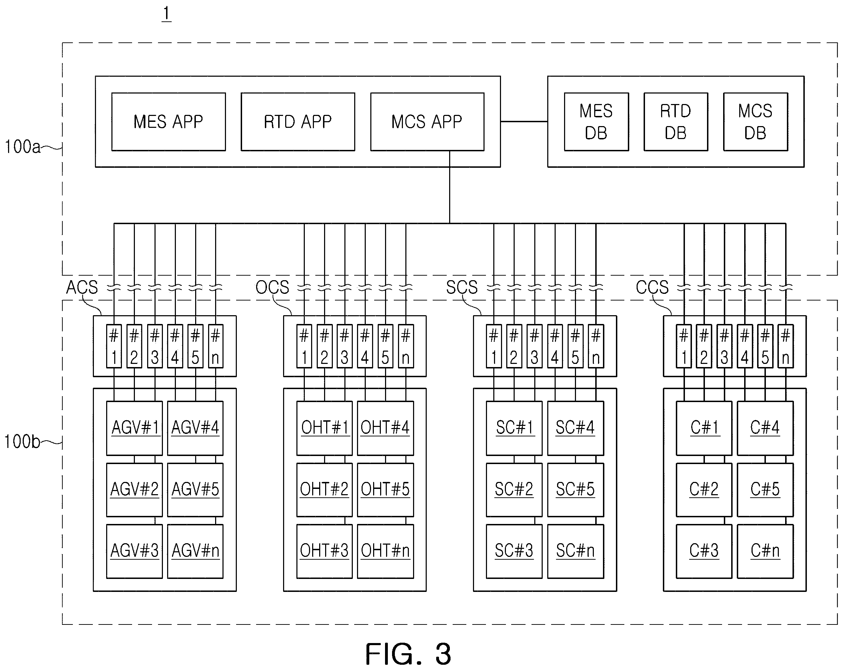

FIG. 3 is a block diagram illustrating an automated transportation system according to a comparative example.

Referring to FIG. 3, an automated transportation system 1 may include a facility layer 100b and a system layer 100a. The facility layer 100b and the system layer 100a may be spatially separated. As an example, the facility layer 100b may correspond to a production site in which transport goods are transported, and the system layer 100a may correspond to a server room in which a server for controlling transportation facilities is established.

The transportation facilities included in the facility layer 100b may include at least one of an automated guided vehicle (AGV), an overhead hoist transport (OHT), a stacker crane (SC), and a conveyor (C). As illustrated in FIG. 3, the facility layer 100b is illustrated as including AGV, OHT, SC, and C in plural respectively, but this is only an example and the present disclosure is not limited thereto.

In general, the facility layer 100b may include a transportation facility control system for controlling each of the transportation facilities. For example, the transportation facility control system may include, in plural, at least one of ACS, OCS, SCS, and CCS corresponding to the transportation facilities respectively.

The transportation facility control system may be established on a control PC disposed at the production site. For example, the control PC in which the transportation facility control system is established may be disposed near the respective transportation facilities to control the corresponding transportation facilities. On the other hand, the facility layer 100b may occupy a relatively large space as compared to the system layer 100a. Accordingly, the facility layer 100b may be in an environment that is relatively inferior to the system layer 100a in terms of accessibility, security, and stability.

In detail, the Control PC disposed near the transportation facility may include a plurality of hardware devices for operation and backup of the transportation facility. Since the control PC should be installed separately for each transportation facility, the efficiency of resource utilization may be reduced. In addition, in the case in which a transportation facility is added, it may be necessary to secure an additional space for a control PC disposed adjacent thereto.

On the other hand, when performing the operation of the automated transportation system 1 using PCs for control dispose in a relatively large space, since it is necessary to perform individual operations, operational efficiency may be reduced. In addition, since integrated monitoring of the control PC is not possible, in the event of a failure in the control PC, separate operating personnel should be put into the production site, and therefore, coping with failure may be delayed.

In the system layer 100a, application servers MES APP, RTD APP and MCS APP for managing a material control system (MCS) for overall controlling the automated transportation system 1, a real-time dispatcher (RTD), and Manufacturing Execution System (MES), and database MES DB, RTD DB and MCS DB that store information related to the operation of the automated transportation system 1 may be established.

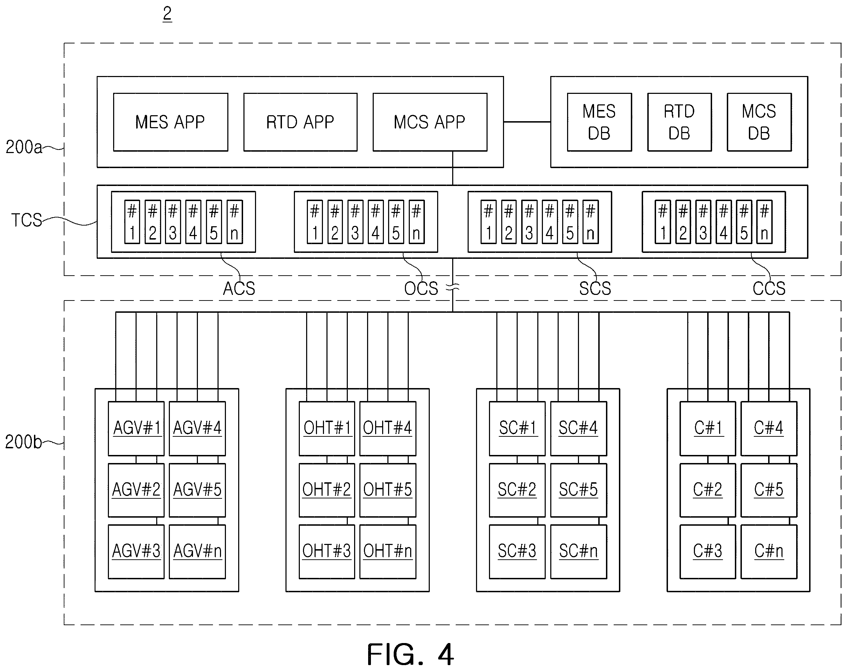

FIG. 4 is a block diagram illustrating an automated transportation system according to an embodiment.

Referring to FIG. 4, an automated transportation system 2 according to an embodiment may include a facility layer 200b and a system layer 200a.

Similar to the automated transportation system 1 described in FIG. 3, the facility layer 200b may correspond to a production site, and the system layer 200a may correspond to a server room spatially separated from the production site.

The facility layer 200b may include a plurality of transportation facilities. The plurality of transportation facilities included in the facility layer 200b may be at least one of an automated guided vehicle (AGV), an overhead hoist transport (OHT), a stacker crane (SC), and a conveyor (C).

In the automated transportation system 2 according to an embodiment, an integrated control system (TCS) and an automatic transport control system may be established in the system layer 200a. As an example, the automatic transport control system may include a material control system (MCS) and a real-time dispatcher (RTD), and databases RTD DB and MCS DB for storing information corresponding to the operation of the MCS and the RTD may be established together. However, this is merely an example and the present disclosure may not be limited. For example, in the system layer 200a, a manufacturing execution system (MES) and a database (MES DB) corresponding thereto may be further established.

In an example, the integrated control system (TCS) may include a plurality of transportation facility control systems for controlling the respective transportation facilities. The plurality of transportation facility control systems may include at least one of ACS, OCS, SCS, and CCS respectively corresponding to the transportation facilities included in the facility layer 200b, in plural. In the automated transportation system 2 according to an embodiment, the integrated control system (TCS) may be established in the server room provided in a separate space, not in the facility layer 200b in which the transportation facilities are disposed, for example, the production site.

A Manufacturing Execution System (MES) may be a system for supporting all activities for performing production at a production site. As an example, the various activities may include scheduling, work order, quality control, work performance aggregation, and the like. MES may provide useful and systematic production methods, procedures, and various data generated at the production site. In the automated transportation system 2 according to an embodiment, the MES may collect and analyze production-related information, and automate the process of controlling and monitoring the production process.

The Real-Time Dispatcher (RTD) may inquire information on available lots and facilities to select an optimal transport item in real time to perform dispatching. For example, the RTD may select an available transport operation according to a predetermined rule and determine the order thereof.

The material control system (MCS) may transmit an efficient transport command to transportation facilities through optimal transfer path management. On the other hand, the MCS may control the overall logistics in the automated transportation system 2 by performing monitoring on the conveyed goods in real time. In the automated transportation system 2 according to an embodiment, the MCS may transmit a transport command to transportation facilities in connection with the RTD and the MES and control the logistics.

In the automated transportation system 2 according to an embodiment, the integrated control system (TCS) and automatic transport control system (MCS, RTD, MES) established in the system layer 200a may be integratedly managed by the application server in the server room. Accordingly, a given resource may be efficiently utilized by using the automated transportation system 2 according to an embodiment.

As an example, in the automated transportation system 2 according to an embodiment, even when a transportation facility is added to the facility layer 200b, there is no need to install a separate control PC equipped with a transportation facility control system. In this case, by adding a control system corresponding to the transportation facility added to the integrated control system established in the server room, logistics facilities may be flexibly expanded.

In addition, a plurality of transportation facilities interfaced to the integrated control system (TCS) may be monitored in real time within the server room. On the other hand, the transportation facility control system for controlling the plurality of transportation facilities may be managed by the server and hardware regularly in the server room without needing to be managed individually. Accordingly, even when a failure occurs in the integrated control system (TCS) including the transportation facility control system, it is possible to quickly respond.

On the other hand, unlike the facility layer 200b to which numerous workers may access, since only an authorized administrator may access the system layer 200a, by building an integrated control system (TCS) in the server room, the security environment of the automated transportation system 2 may be improved.

The automated transportation system 2 according to an embodiment may be applied to a battery production process. The battery being produced and/or the battery having been produced by the battery production process may be transported by at least one of a plurality of transportation facilities disposed in the facility layer 200b. As an example, the battery in production and/or the battery produced may be transported by an automated guided vehicle (AGV), an overhead hoist transport (OHT), and/or a conveyor (C), and may be transported by stacker crane (SC), to be stored.

On the other hand, the battery in production and/or the battery produced may be transported using a plurality of transportation facilities controlled by the integrated control system (TCS) established in the system layer 200a. The integrated control system (TCS) may be established in a server room spatially separated from the production site, and the integrated control system (TCS) may be controlled to transport batteries in production and/or produced batteries to the optimal route by the material control system (MCS), the real-time dispatcher (RTDs), and/or the manufacturing execution system (MES). However, this is only an embodiment and the present disclosure may not be limited, and the automated transportation system 2 may be applied in various manners in various fields.

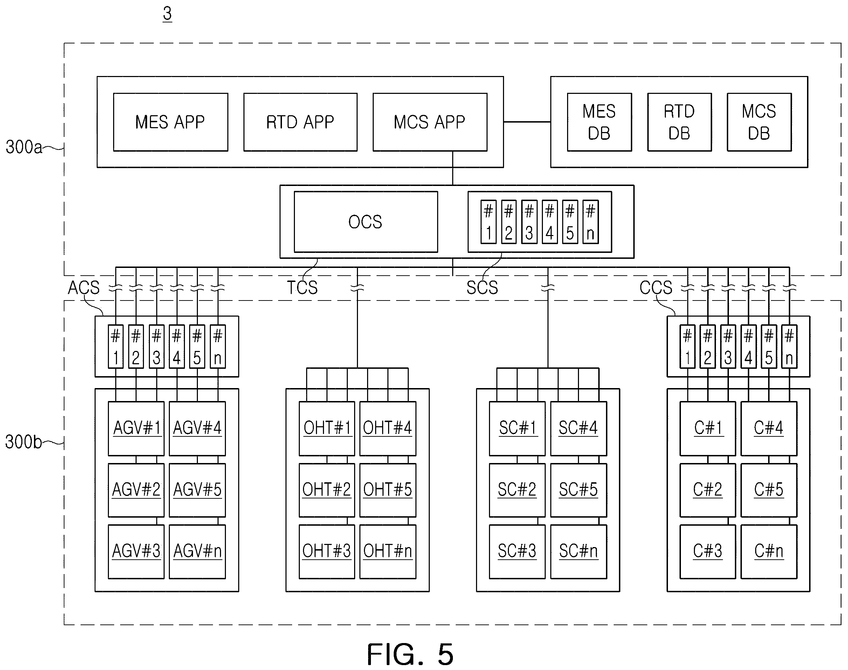

FIG. 5 is a block diagram illustrating an automated transportation system according to another embodiment.

Referring to FIG. 5, an automated transportation system 3 according to an embodiment may include a facility layer 300b and a system layer 300a. Similar to the automated transportation system 2 described in FIG. 4, the facility layer 300b may correspond to a production site, and the system layer 300a may correspond to a server room spatially separated from the production site.

The facility layer 300b may include a plurality of transportation facilities. The plurality of transportation facilities included in the facility layer 200b may be at least one of an automated guided vehicle (AGV), an overhead hoist transport (OHT), a stacker crane (SC), and a conveyor (C).

In the automated transportation system 3 according to an embodiment, a plurality of transportation facility control systems for controlling a plurality of transportation facilities may be established in the control PC installed in the facility layer 300b and/or may be included in the integrated control system (TCS) established in the system layer 300b.

In FIG. 5, although it is illustrated that an OCS for controlling the first transportation facility, such as an overhead hoist transport (OHT) and an SCS for controlling the stacker crane (SC) are included in the system layer 300a and an ACS for controlling a second transportation facility such as an automated guided vehicle (AGV) and a CCS for controlling a conveyor (C) are included in the facility layer 300b; this is only an example and the present disclosure may not be particularly limited.

For example, first control systems for controlling some of the plurality of transportation facilities included in the facility layer 300b, for example, the first transportation facilities, may be managed by the integrated control system (TCS) established in the system layer 300b. On the other hand, the second control systems for controlling the remaining part of the plurality of transportation facilities included in the facility layer 300b, for example, the second transportation facilities, may be established on a control PC installed near multiple transportation facilities.

The types of the first transportation facility and the second transportation facility are not limited to those illustrated in FIG. 5, and may vary as necessary. For example, the first transportation facility and the second transportation facility may be at least one of AGV, OHT, SC, and C, and may also be other transportation facilities.

In the system layer 300a of the automated transportation system 3, an application server for managing an automatic transport control system including an integrated control system (TCS), a material control system (MCS) and a real-time dispatcher (RTD) may be established. In the system layer 300a, databases RTD DB and MCS DB for storing information corresponding to the operations of the MCS and the RTD may be established together. However, this is only an embodiment and the present disclosure may not be limited, and a manufacturing execution system (MES) and a database (MES DB) corresponding thereto may be further established in the system layer 300a.

The automated transportation system 3 according to an embodiment may be applied to a battery production process. The battery being produced and/or the produced battery by the battery production process may be transported by at least one of a plurality of transportation facilities disposed in the facility layer 300b.

The battery in production and/or the battery produced may be transported by the first transportation facilities controlled by the integrated control system (TCS) established in the system layer 300a. On the other hand, the battery in production and/or the produced battery may be transported by second transportation facilities controlled by a plurality of transportation facility control systems established in the facility layer 300b.

The Multiple integrated control system (TCS) may be deployed in the server room spatially separated from the production site, and the integrated control system (TCS) may be controlled to transport batteries in production and/or produced batteries to the optimal route by the material control system (MCS), the real-time dispatcher (RTD), and/or the manufacturing execution system (MES) . However, this is only an embodiment and the present disclosure may not be limited, and the automated transportation system 3 may be applied in various manners in various fields.

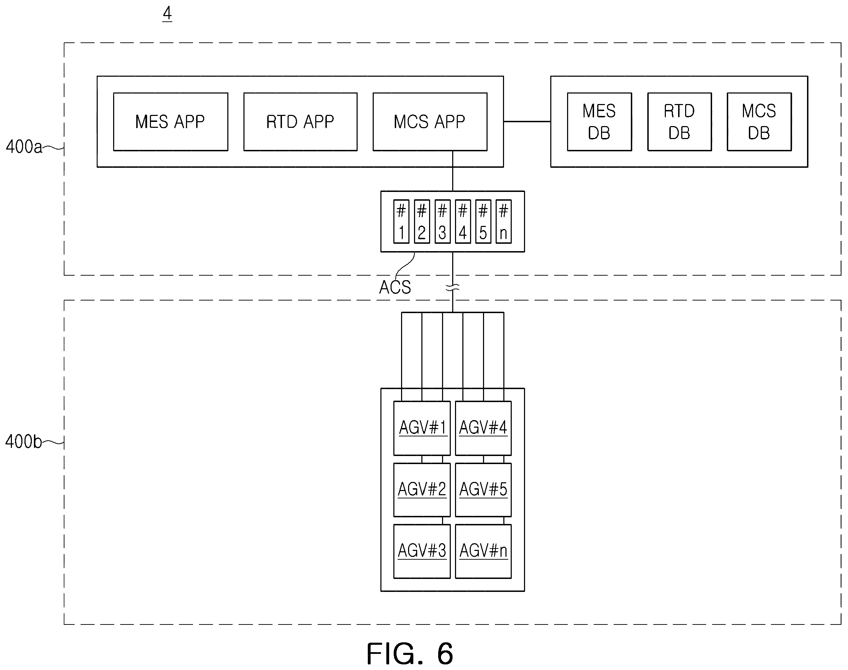

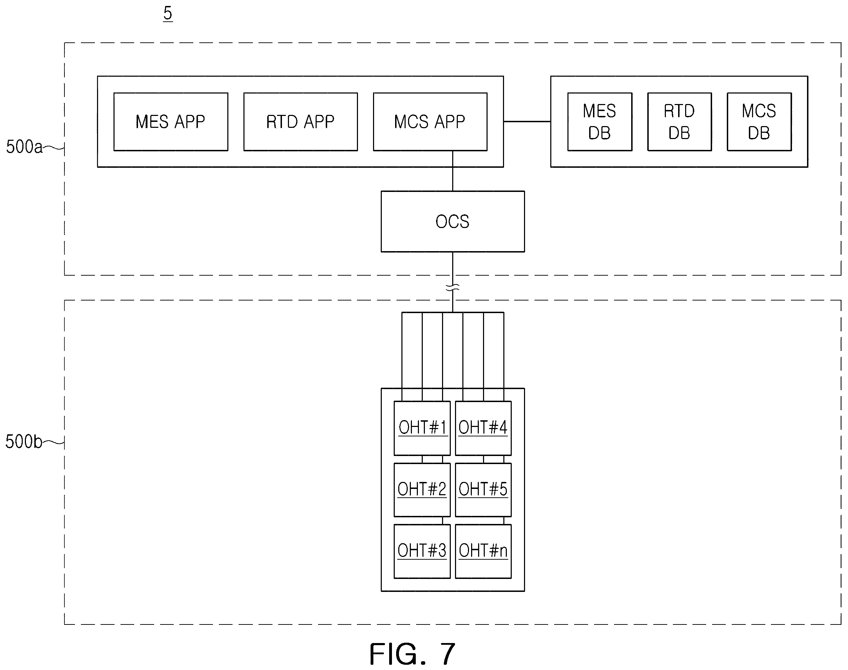

FIG. 6 is a block diagram illustrating an automated transportation system according to another embodiment. FIG. 7 is a block diagram illustrating an automated transportation system according to another embodiment.

Referring to FIGS. 6 and 7, automated transportation systems 4 and 5 according to embodiments of the present disclosure may include facility layers 400b and 500b and system layers 400a and 500a, respectively. Similar to the automated transportation system 2 described in FIG. 4, the facility layers 400b and 500b may correspond to a production site, and the system layers 400a and 500a may correspond to a server room spatially separated from the production site.

The facility layers 400b and 500b may include a plurality of transportation facilities. The plurality of transportation facilities included in the facility layers 400b and 500b may be any one of an automated guided vehicle (AGV), an overhead hoist transport (OHT), a stacker crane (SC), and a conveyor (C). For example, the plurality of transportation facilities included in the facility layer 400b in FIG. 6 may be AGVs, and the plurality of transportation facilities included in the facility layer 500b in FIG. 7 may be OHTs. However, this is only an example and the present disclosure may not be limited.

Referring to FIG. 6, in the automated transportation system 4 according to an embodiment, a plurality of transportation facility control systems, for example, ACSs, for controlling a plurality of transportation facilities, for example, AGVs, may be established in the system layer 400a.

On the other hand, referring to FIG. 7, in the automated transportation system 5 according to an embodiment, one transportation facility control system, e.g., OHT control system, for controlling a plurality of transportation facilities, e.g., OHTs, may be established in the system layer 500a.

In the system layers 400a and 500a of the automated transportation systems 4 and 5, an application server may be established to manage the automatic transport control system including the material control system (MCS) and the real-time dispatcher (RTD) together with ACSs or OCS. In the system layers 400a and 500a, databases RTD DB and MCS DB for storing information corresponding to the operations of the MCS and the RTD may be established together. However, this is only an embodiment and the present disclosure may not be limited, and a manufacturing execution system (MES) and a database (MES DB) corresponding thereto may be further established in the system layers 400a and 500a.

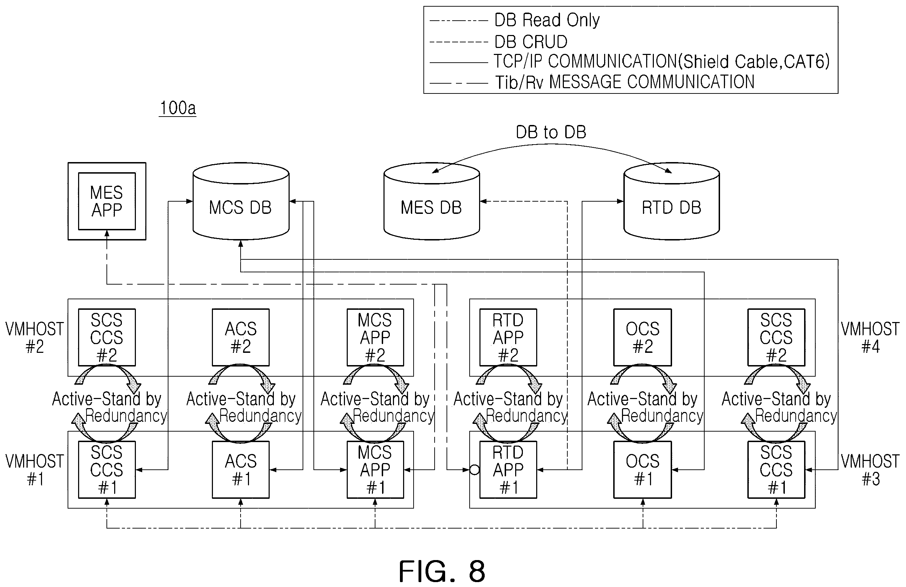

FIG. 8 is a block diagram illustrating a system layer of an automated transportation system according to an embodiment.

FIG. 8 may be a block diagram illustrating an example of the system layer 200a of the automated transportation system 2 according to the embodiment illustrated in FIG. 4. The system layer 200a of the automated transportation system 2 may be a server room provided in a separate space spatially separated from the production site.

Referring to FIG. 8, in at least one hardware device disposed in the system layer 200a, the integrated control system (TCS) and the automatic transport control systems MCS and RTD, which are integratedly managed by the application server in the server room, may be established. On the other hand, in at least one hardware device disposed in the system layer 200a, a manufacturing execution system (MES) may be further established.

The integrated control system (TCS) controls a plurality of transportation facilities based on a transport command transmitted by the automatic transport control system (MCS, RTD) established together in the server room, to transport goods.

Systems included in the system layer 200a may be implemented as virtual machines (VMs) generated by at least one host. As an example, the integrated control system (TCS) and the automatic transport control system (MCS, RTD) may be managed by a plurality of virtualized hosts.

Referring to FIG. 8, a first control system (ACS#1, OCS#1, SCS#1, CCS#1), a first material control system (MCS APP #1), and a first real-time dispatcher (RTD APP #1) may be respectively managed by a first host (VMHOST#1) or a third host (VMHOST#3) . On the other hand, a second control system (ACS#2, OCS#2, SCS#2, CCS#2), a second material control system (MCS APP #2), and a second real-time dispatcher (RTD APP #2) may be respectively managed by a second host (VMHOST#2) or a fourth host (VMHOST#4) . As an example, the first control system (ACS#1, OCS#1, SCS#1, CCS#1) and the second control system (ACS#2, OCS#2, SCS#2, CCS#2) may be a transportation facility control system included in the integrated control system.

In the automated transportation system 2 according to an embodiment, systems managed by a plurality of hosts may have a redundant structure. Accordingly, even in a case in which a failure occurs in the network equipment occupying a portion of the automated transportation system 2, the system function may be continuously provided.

For example, the first control system (ACS#1, OCS#1, SCS#1, CCS#1) and the second control system (ACS#2, OCS#2, SCS#2, CCS#2) managed by different hosts may have an active-standby structure. In addition, the first material control system (MCS APP #1) and the second material control system (MCS APP #2) managed by different hosts, and the first real-time dispatcher (RTD APP #1) and the second real-time dispatcher (RTD APP #2) managed by different hosts, may respectively have an active-active structure.

Systems managed by the first host (VMHOST#1) and the third host (VMHOST#3) may transmit/receive information to each other through message communication based on TCP/IP. Similarly, systems managed by the second host (VMHOST#2) and the fourth host (VMHOST#4) may transmit/receive information to each other through TCP/IP-based communication. On the other hand, the material control system (MCS APP) and the real-time dispatcher (RTD APP) may respectively transmit and receive information to and from the manufacturing execution systems (MES APP).

The transportation facility control systems included in the integrated control system (TCS), and the automatic transport control system (MCS, RTD), respectively, may process data on the operation of the automatic transport control system (MCS, RTD) stored in the database (MCS DB, RTD DB) of the automatic transport control system. For example, the respective systems may create, read, update, and delete related data. On the other hand, the real-time dispatcher (RTD) may read data stored in the database (MES DB) of the manufacturing execution system.

However, the structure of the system layer 200a illustrated in FIG. 8, the communication method between systems, and the data processing method are merely embodiments, and the present disclosure may not be limited.

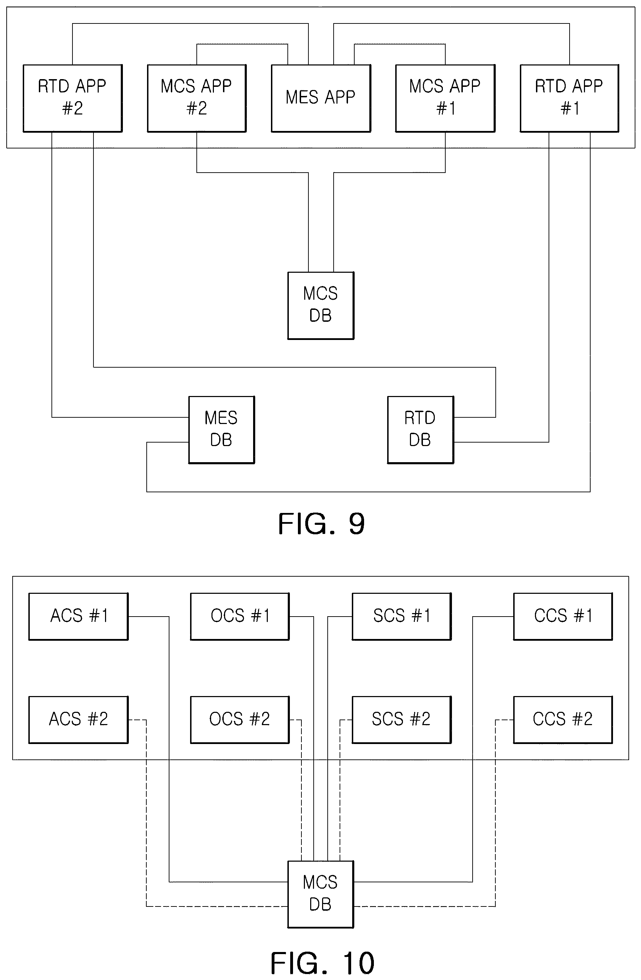

FIGS. 9 and 10 are block diagrams illustrating the server redundancy structure in the automated transportation system according to an embodiment.

Referring to FIGS. 9 and 10, as described above, systems managed by a plurality of hosts may have a redundant structure.

Referring to FIG. 9, the material control system may include a first material control system (MCS APP #1) and a second material control system (MCS APP #2) managed by different hosts, and the real-time dispatcher may include a first real-time dispatcher (RTD APP #1) and a second real-time dispatcher (RTD APP #2) managed by different hosts. In this case, the first material control system (MCS APP #1) and the second material control system (MCS APP #2), and the first real-time dispatcher (RTD APP #1) and the second real-time dispatcher (RTD APP #2) may respectively have an active-active structure.

According to the active-active structure, the application server (MES APP) of the manufacturing execution system may be respectively connected to the first material control system (MCS APP #1), the second material control system (MCS APP #2), the first real-time dispatcher (RTD APP #1), and the second real-time dispatcher (RTD APP #2).

The first material control system (MCS APP #1), the second material control system (MCS APP #2), the first real-time dispatcher (RTD APP #1), and the second real-time dispatcher (RTD APP #2) may always operate in an active state. On the other hand, in a case in which a failure occurs in the operation of any one system and/or dispatcher, another normal system and/or dispatcher may be used to replace the operation of the failed system and/or dispatcher.

Referring to FIG. 10, the integrated control system (TCS) may include the first control system (ACS#1, OCS#1, SCS#1, CCS#1) and the second control system (ACS#2, OCS#2, SCS#2, CCS#2) managed by different hosts. In this case, the first control system (ACS#1, OCS#1, SCS#1, CCS#1) and the second control system (ACS#2, OCS#2, SCS#2, CCS#2) may have an active-standby structure.

According to the active-standby structure, the database (MCS DB) of the material control system may be respectively connected to the first control system (ACS#1, OCS#1, SCS#1, CCS#1) and the second control system (ACS#2, OCS#2, SCS#2, CCS#2).

The first control system (ACS#1, OCS#1, SCS#1, CCS#1) may operate in an active state, and the second control system (ACS#2, OCS#2, SCS#2, CCS#2) may operate in a standby state. On the other hand, in a case in which a failure occurs in the operation of any one of the first control systems (ACS#1, OCS#1, SCS#1, CCS#1), the system is switched to a standby state and the corresponding control system is switched to an active state, thereby replacing the operation of the system that has failed.

As set forth above, the automated transportation system according to an embodiment may efficiently and stably improve the operating environment by managing transportation facilities in an integrated manner, and may promptly respond to problems that may occur in the system.

The automated transportation system according to an embodiment may improve the security environment by using an integrated control system that may only be accessed by an authorized administrator.

While embodiments have been illustrated and described above, it will be apparent to those skilled in the art that modifications and variations could be made without departing from the scope of the present inventive concept as defined by the appended claims.

## Claims

1. An automated transportation system comprising:
a facility layer (100b, 200b, 300b, 400b, 500b) including at least one first transportation facility; and
a system layer (100a, 200a, 300a, 400a, 500a), in which an integrated control system (TCS) controlling the at least one first transportation facility, a material control system (MCS) (10) controlling a transport command with respect to the integrated control system, an application server (MES APP, RTD APP, MCS APP) managing a Real-Time Dispatcher (RTD), and a database storing information corresponding to an operation of the material control system and the real-time dispatcher are established,
wherein the facility layer (100b, 200b, 300b, 400b, 500b) corresponds to a production site where transportation goods are transported by the at least one first transportation facility, **characterized in that** the system layer (100a, 200a, 300a, 400a, 500a) corresponds to a server room spatially separated from the production site, in which a server controlling the at least one first transportation facility is established.

2. The automated transportation system of claim 1, wherein the facility layer further comprises at least one second transportation facility, and
the integrated control system controls the at least one second transportation facility together with the at least one first transportation facility.

3. The automated transportation system of claim 2, wherein each of the at least one first transportation facility and the at least one second transportation facility is one of an automated guided vehicle (AGV), an overhead hoist transport (OHT), a stacker crane, and a conveyor.

4. The automated transportation system of claim 3, wherein the integrated control system comprises at least one first control system respectively corresponding to the at least one first transportation facility, and at least one second control system respectively corresponding to the at least one second transportation facility.

5. The automated transportation system of claim 1, wherein the at least one first transportation facility is an Overhead Hoist Transport (OHT), and the integrated control system comprises one OHT Control System (OCS) controlling the at least one first transportation facility.

6. The automated transportation system of claim 1, wherein the facility layer further comprises at least one second transportation facility, and a transportation facility control system controlling the at least one second transportation facility.

7. The automated transportation system of claim 1, wherein in the system layer, a Manufacturing Execution System (MES) executed by the application server, and a database storing information about an operation of the manufacturing execution system are further established.

8. The automated transportation system of claim 1, wherein systems included in the system layer are implemented as virtual machines (VMs) created in at least one host.

9. The automated transportation system of claim 8, wherein the integrated control system, the material control system, and the real-time dispatcher managed by the application server have at least one of a redundancy structure or a replication system design.

10. The automated transportation system of claim 9, wherein the integrated control system includes a first control system and a second control system managed by different hosts, wherein the first control system and the second control system have an active-active structure.

11. The automated transportation system of claim 9, wherein the material control system includes a first material control system and a second material control system managed by different hosts, and the real-time dispatcher includes a first real-time dispatcher and a second real-time dispatcher managed by different hosts, wherein the first material control system, the second material control system, the first real-time dispatcher and the second real-time dispatcher respectively have an active-standby structure.

## Patentansprüche

1. Automatisiertes Transportsystem, umfassend:
eine Einrichtungsschicht (100b, 200b, 300b, 400b, 500b), die mindestens eine erste Transporteinrichtung enthält; und
eine Systemschicht (100a, 200a, 300a, 400a, 500a), in der ein integriertes Steuersystem (TCS), das die mindestens eine erste Transporteinrichtung steuert, ein Materialsteuersystem (MCS) (10), das einen Transportbefehl in Bezug auf das integrierte Steuersystem steuert, ein Anwendungsserver (MES APP, RTD APP, MCS APP), der einen Echtzeit-Dispatcher (RTD) verwaltet, und eine Datenbank, die Informationen speichert, die einem Betrieb des Materialsteuersystems und des Echtzeit-Dispatchers entsprechen, eingerichtet sind,
wobei die Einrichtungsschicht (100b, 200b, 300b, 400b, 500b) einem Produktionsstandort entspricht, an dem Transportgüter durch die mindestens eine erste Transporteinrichtung transportiert werden, **dadurch gekennzeichnet, dass** die Systemschicht (100a, 200a, 300a, 400a, 500a) einem Serverraum entspricht, der räumlich von dem Produktionsstandort getrennt ist, in dem ein Server eingerichtet ist, der die mindestens eine erste Transporteinrichtung steuert.

2. Automatisiertes Transportsystem nach Anspruch 1, wobei die Einrichtungsschicht ferner mindestens eine zweite Transporteinrichtung umfasst, und
das integrierte Steuersystem die mindestens eine zweite Transporteinrichtung zusammen mit der mindestens einen ersten Transporteinrichtung steuert.

3. Automatisiertes Transportsystem nach Anspruch 2, wobei jede der mindestens einen ersten Transporteinrichtung und der mindestens einen zweiten Transporteinrichtung eines von einem automatisierten geführten Fahrzeug (AGV), einem Hängehebetransport (OHT), einem Stapelkran und einem Förderer ist.

4. Automatisiertes Transportsystem nach Anspruch 3, wobei das integrierte Steuersystem mindestens ein erstes Steuersystem, das jeweils der mindestens einen ersten Transporteinrichtung entspricht, und mindestens ein zweites Steuersystem, das jeweils der mindestens einen zweiten Transporteinrichtung entspricht, umfasst.

5. Automatisiertes Transportsystem nach Anspruch 1, wobei die mindestens eine erste Transporteinrichtung ein Hängehebetransport (OHT) ist und das integrierte Steuersystem ein OHT-Steuersystem (OCS) umfasst, das die mindestens eine erste Transporteinrichtung steuert.

6. Automatisiertes Transportsystem nach Anspruch 1, wobei die Einrichtungsschicht ferner mindestens eine zweite Transporteinrichtung und ein Transporteinrichtungssteuersystem, das die mindestens eine zweite Transporteinrichtung steuert, umfasst.

7. Automatisiertes Transportsystem nach Anspruch 1, wobei in der Systemschicht ferner ein Herstellungsausführungssystem (MES), das durch den Anwendungsserver ausgeführt wird, und eine Datenbank, die Informationen über einen Betrieb des Herstellungsausführungssystems speichert, eingerichtet sind.

8. Automatisiertes Transportsystem nach Anspruch 1, wobei Systeme, die in der Systemschicht enthalten sind, als virtuelle Maschinen (VMs) implementiert sind, die in mindestens einem Host erzeugt werden.

9. Automatisiertes Transportsystem nach Anspruch 8, wobei das integrierte Steuersystem, das Materialsteuersystem und der Echtzeit-Dispatcher, die durch den Anwendungsserver verwaltet werden, mindestens eines von einer Redundanzstruktur oder einem Replikationssystemdesign aufweisen.

10. Automatisiertes Transportsystem nach Anspruch 9, wobei das integrierte Steuersystem ein erstes Steuersystem und ein zweites Steuersystem enthält, die durch verschiedene Hosts verwaltet werden, wobei das erste Steuersystem und das zweite Steuersystem eine Aktiv-Aktiv-Struktur aufweisen.

11. Automatisiertes Transportsystem nach Anspruch 9, wobei das Materialsteuersystem ein erstes Materialsteuersystem und ein zweites Materialsteuersystem enthält, die durch verschiedene Hosts verwaltet werden, und der Echtzeit-Dispatcher einen ersten Echtzeit-Dispatcher und einen zweiten Echtzeit-Dispatcher enthält, die durch verschiedene Hosts verwaltet werden, wobei das erste Materialsteuersystem, das zweite Materialsteuersystem, der erste Echtzeit-Dispatcher und der zweite Echtzeit-Dispatcher jeweils eine Aktiv-Standby-Struktur aufweisen.

## Revendications

1. Système de transport automatisé comprenant :
une couche d'installation (100b, 200b, 300b, 400b, 500b) comprenant au moins un premier dispositif de transport ; et
une couche système (100a, 200a, 300a, 400a, 500a) dans laquelle un système de commande intégré (TCS) qui commande le au moins un premier dispositif de transport, un système de commande de matériel (MCS) (10) qui commande une instruction de transport par rapport au système de commande intégré, un serveur d'application (MES APP, RTD APP, MCS APP) qui gère un répartiteur en temps réel (RTD) et une base de données qui stocke des informations correspondant à un fonctionnement du système de contrôle des matériaux et du répartiteur en temps réel,
la couche d'installation (100b, 200b, 300b, 400b, 500b) correspondant à un site de production où des marchandises transportées sont transportées par le au moins un premier dispositif de transport, **caractérisé en ce que** la couche système (100a, 200a, 300a, 400a, 500a) correspond à une salle de serveurs qui est séparée physiquement du site de production, dans laquelle est installé un serveur qui commande le au moins un premier dispositif de transport.

2. Système de transport automatisé selon la revendication 1, dans lequel la couche d'installation comprend en outre au moins un deuxième dispositif de transport, et
le système de commande intégré commande le au moins un deuxième dispositif de transport conjointement avec le au moins un premier dispositif de transport .

3. Système de transport automatisé selon la revendication 2, dans lequel chacun des au moins un premier dispositif de transport et des au moins un deuxième dispositif de transport est l'un parmi un véhicule guidé automatisé (AGV), un transport par suspension (OHT), une grue empileuse et un convoyeur.

4. Système de transport automatisé selon la revendication 3, dans lequel le système de commande intégré comprend au moins un premier système de commande correspondant à chacun des au moins un premier dispositif de transport et au moins un deuxième système de commande correspondant à chacun des au moins un deuxième dispositif de transport.

5. Système de transport automatisé selon la revendication 1, dans lequel le au moins un premier dispositif de transport est un convoyeur aérien (OHT) et le système de commande intégré comprend un système de commande OHT (OCS) qui commande le au moins un premier dispositif de transport.

6. Système de transport automatisé selon la revendication 1, dans lequel la couche de dispositifs comprend en outre au moins un deuxième dispositif de transport et un système de commande de dispositif de transport qui commande ledit au moins un deuxième dispositif de transport.

7. Système de transport automatisé selon la revendication 1, dans lequel la couche système comprend en outre un système d'exécution de la fabrication (MES) exécuté par le serveur d'application et une base de données qui stocke des informations sur le fonctionnement du système d'exécution de la fabrication.

8. Système de transport automatisé selon la revendication 1, dans lequel les systèmes inclus dans la couche système sont implémentés sous forme de machines virtuelles (VM) créées dans au moins un hôte.

9. Système de transport automatisé selon la revendication 8, dans lequel le système de contrôle intégré, le système de contrôle des matériaux et le répartiteur en temps réel, qui sont gérés par le serveur d'applications, comportent au moins une structure redondante ou une conception de système de réplication.

10. Système de transport automatisé selon la revendication 9, dans lequel le système de contrôle intégré comprend un premier système de contrôle et un deuxième système de contrôle gérés par des hôtes différents, le premier système de contrôle et le deuxième système de contrôle comportant une structure active-active.

11. Système de transport automatisé selon la revendication 9, dans lequel le système de contrôle des matériaux comprend un premier système de contrôle des matériaux et un deuxième système de contrôle des matériaux qui sont gérés par des hôtes différents, et le répartiteur en temps réel comprend un premier répartiteur en temps réel et un deuxième répartiteur en temps réel, qui sont gérés par différents hôtes, le premier système de contrôle des matériaux, le deuxième système de contrôle des matériaux, le premier répartiteur en temps réel et le deuxième répartiteur en temps réel présentant chacun une structure active-veille.
